# FASCICULE DE BREVET EUROPEEN

(11) **EP 2 091 986 B1**
(45) Date de publication et mention de la délivrance du brevet: **22.03.2017**
(21) Numéro de dépôt: 07871974.7
(22) Date de dépôt: 19.12.2007
(51) Int. Cl.: C08G 14/08, C09J 161/24, C09J 161/34, C08J 5/04, E04B 1/76, C03C 25/26, C03C 25/34

(54) **COMPOSITION D'ENCOLLAGE POUR FIBRES MINERALES COMPRENANT UNE RESINE PHENOLIQUE, ET PRODUITS RESULTANTS**
LEIMZUSAMMENSETZUNG FÜR MINERALFASERN MIT EINEM PHENOLHARZ UND DARAUS GEWONNENE PRODUKTE
GLUE COMPOSITION FOR MINERAL FIBRES CONTAINING A PHENOLIC RESIN, AND RESULTING PRODUCTS

(30) Priorité: 22.12.2006 FR 0655878
(43) Date de publication de la demande: 26.08.2009
(73) Titulaire: SAINT-GOBAIN ISOVER, 92400 Courbevoie (FR)
(72) Inventeur: DOUCE, Jérôme, F-75010 Paris (FR); DEKONINCK, Alexandra, F-95460 Ezanville (FR); CHOPIN, Véronique, F-95820 Bruyeres sur Oise (FR)
(74) Mandataire: Saint-Gobain Recherche
(86) Numéro de dépôt international: PCT/FR2007/052561
(87) Numéro de publication internationale: WO 2008/084173

(56) Documents cités:
- WO-A-02/26653
- GB-A- 2 170 208

## Description

L'invention se rapporte à la fabrication de produits d'isolation formés de fibres minérales, plus particulièrement à une composition d'encollage pour de telles fibres, notamment des fibres fines.

Les produits d'isolation à base de fibres minérales peuvent être formés à partir de fibres obtenues par différents procédés, par exemple selon la technique connue du fibrage centrifuge interne ou externe. La centrifugation consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

Pour assurer l'assemblage des fibres entre elles et permettre à la nappe d'avoir de la cohésion, on projette sur les fibres, à la sortie du dispositif centrifuge, une composition d'encollage contenant une résine thermodurcissable. La nappe de fibres revêtues de l'encollage est soumise à un traitement thermique (à une température supérieure à 100°C) afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage se compose de la résine (en général sous la forme d'une solution aqueuse), d'urée, d'un catalyseur de réticulation, éventuellement d'additifs tels que silanes et huiles minérales, et d'eau.

Les résines thermodurcissables les plus couramment utilisées sont des résines phénoliques appartenant à la famille des résols. Les résols sont obtenus par condensation de phénol et de formaldéhyde, en présence d'un catalyseur basique, dans un rapport molaire formaldéhyde/phénol généralement supérieur à 1 de manière à favoriser la réaction entre le phénol et le formaldéhyde et à diminuer le taux de phénol résiduel dans la résine.

De l'urée est introduite dans la composition d'encollage pour piéger le formaldéhyde libre sous la forme de condensats urée-formaldéhyde.

Le catalyseur peut être un acide fort, ou un sel d'ammonium d'un tel acide agissant en tant que catalyseur latent, par exemple un sel d'ammonium d'acide sulfamique, d'acide oxalique, d'acide sulfurique, d'acide méthanesulfonique, d'acide toluènesulfonique et d'acide phénolsulfonique (US 5 952 440). Habituellement, le catalyseur est le sulfate d'ammonium. S'il s'avère très efficace en terme de réticulation de la résine, le sulfate d'ammonium peut cependant conduire à une gélification précoce de la résine (pré-gélification) qui affecte la qualité du produit d'isolation final, notamment ses propriétés mécaniques qui se trouvent diminuées du fait que la résine ne peut lier correctement les fibres. Aussi, le sulfate d'ammonium est-il généralement utilisé en mélange avec un inhibiteur tel que l'ammoniaque dont le rôle est de maintenir la composition d'encollage à un pH basique (égal ou supérieur à 7) afin que celle-ci reste stable jusqu'au traitement thermique de réticulation de la résine. Dans WO 02/26653, à la composition d'encollage du type précité est ajouté au moins un sulfite et/ou au moins un précurseur de celui-ci dans le but d'améliorer la résistance mécanique des produits d'isolation à base de laine minérale après vieillissement, en particulier en milieu humide.

La réglementation en matière de protection de l'environnement devenant plus contraignante oblige les fabricants de produits d'isolation à rechercher des solutions permettant de réduire les émissions indésirables générées par ce type de composition d'encollage.

Il est connu que, dans les conditions de température appliquées au traitement de la nappe de fibres encollées dans l'étuve, les condensats urée-formaldéhyde ne sont pas stables thermiquement et se décomposent en libérant du formaldéhyde et de l'urée, à son tour dégradée en ammoniac. Il est admis également que l'ammoniaque est apte à se décomposer en gaz ammoniac dans ces mêmes conditions.

Il y a donc un besoin de disposer de compositions d'encollage pouvant réticuler à une température plus faible pour limiter les rejets polluants dans l'atmosphère.

Par ailleurs, il est apparu récemment des produits incorporant des fibres fines qui présentent des propriétés d'isolation améliorées, en particulier une conductivité thermique λ inférieure à 40 mW/(m.K).

L'obtention de tels produits est toutefois rendue difficile par le fait que la nappe de fibres encollées a un pouvoir isolant important et que par conséquent la température au coeur de la nappe est insuffisante pour permettre la réticulation complète de la résine. Une façon de pallier cet inconvénient consiste à augmenter le temps de séjour de la nappe dans l'étuve, mais ceci se traduit par une diminution de la productivité et un coût supplémentaire au niveau du chauffage de l'étuve.

Il y a aussi un besoin de disposer de compositions d'encollage pouvant réticuler à une température plus faible pour permettre l'obtention de produits isolants formés de fibres minérales fines dans des conditions opératoires usuelles, sans avoir à allonger le temps de traitement de la nappe dans l'étuve.

Pour atteindre ces buts, la présente invention propose une composition d'encollage renfermant une résine thermodurcissable, de l'urée et un catalyseur de réticulation, éventuellement des additifs, qui est caractérisée en ce que ledit catalyseur est un mélange de sulfamate d'ammonium et de sulfate d'ammonium dans un rapport molaire du sulfamate d'ammonium au sulfate d'ammonium qui varie de 0,40:0,60 à 0,60:0,40.

L'invention a aussi pour objet l'utilisation de la composition d'encollage pour lier des fibres minérales en vue de former des produits d'isolation thermique et/ou acoustique de faible conductivité thermique λ, en particulier inférieure à 40 mW/(m.K), et les produits ainsi obtenus.

Conformément à l'invention, la composition d'encollage associe, en tant que catalyseur de réticulation de la résine, du sulfamate d'ammonium et du sulfate d'ammonium.

L'association de sulfamate d'ammonium et de sulfate d'ammonium a pour avantage principal de faire baisser la température de réticulation de la résine sans pour autant accroître le risque de gélification de la résine sur les fibres avant le traitement thermique visant à obtenir la liaison définitive des fibres dans le produit d'isolation final. De manière inattendue, il a été observé un effet de synergie lié à l'association des deux composés précités qui se traduit par le maintien du temps de pré-gélification à un niveau proche de celui qui est obtenu en utilisant le sulfamate d'ammonium seul, voire dans certaines conditions décrites plus loin par une augmentation du temps de pré-gélification.

De surcroît, ladite association permet de conférer à la composition d'encollage une stabilité telle qu'il n'est pas nécessaire d'ajouter de l'ammoniaque, ce qui contribue à faire baisser les émissions d'ammoniac dans l'étuve.

En règle générale, le taux de sulfamate d'ammonium et de sulfate d'ammonium varie de 2 à 8 % en poids des matières solides de la résine et de l'urée, de préférence 2,5 à 6 % et avantageusement 2,6 à 4,2 %.

La résine thermodurcissable conforme à l'invention est choisie parmi les résines phénoliques obtenues par réaction d'un composé phénolique et d'un aldéhyde en présence d'un catalyseur basique, dans un rapport molaire aldéhyde/composé phénolique supérieur à 1.

De préférence, le composé phénolique est le phénol et l'aldéhyde est le formaldéhyde.

La résine thermodurcissable peut comprendre une ou plusieurs résines phénoliques précitées.

De telles résines peuvent être préparées selon un cycle de température comprenant trois phases : une phase de chauffage, un palier de température et une phase de refroidissement.

Dans la première phase, on fait réagir l'aldéhyde et le composé phénolique en présence d'un catalyseur basique en chauffant progressivement à une température comprise entre 60 et 75°C, de préférence à environ 70°C. Le rapport molaire aldéhyde/composé phénolique est supérieur à 1, de préférence varie de 2 à 5, et avantageusement de 2,3 à 4,2.

Le catalyseur peut être choisi parmi les catalyseurs connus de l'homme du métier, par exemple la triéthylamine, la chaux (CaO) et les hydroxydes de métaux alcalins ou alcalino-terreux, par exemple les hydroxydes de sodium, de potassium, de calcium ou de baryum. L'hydroxyde de sodium et la chaux sont préférés.

La quantité de catalyseur varie de 2 à 15 % en poids par rapport au poids de phénol de départ, de préférence de 5 à 9 %, et avantageusement de 6 à 8%.

Dans la deuxième phase, la température du mélange réactionnel qui est atteinte après le chauffage du mélange réactionnel (fin de première phase) est maintenue jusqu'à ce que le taux de conversion du phénol soit au moins égal à 90 %, de préférence au moins 93 % et avantageusement au moins 97 %.

Par « taux de conversion du composé phénolique », on entend le pourcentage de composé phénolique ayant participé à la réaction de condensation avec l'aldéhyde par rapport au composé phénolique de départ.

La troisième phase de refroidissement intervient à un stade de la condensation qui correspond à une résine pouvant encore être diluée par de l'eau (diluabilité supérieure à 1000 %). La température finale du mélange refroidi est de l'ordre de 20 à 25°C.

La « diluabilité » est ici définie par le volume d'eau déionisée qu'il est possible, à une température donnée, d'ajouter à une unité de volume de la solution aqueuse de résine avant l'apparition d'un trouble permanent. On considère généralement qu'une résine est apte à être utilisée dans une composition d'encollage lorsque sa diluabilité est égale ou supérieure à 1000 %, à 20°C.

Au cours de la troisième phase, il est possible dès le début du refroidissement (« à chaud ») et jusqu'au refroidissement complet (« à froid ») d'ajouter un composé contenant un atome d'azote pouvant réagir avec l'aldéhyde libre, par exemple de l'urée et/ou une (des) alcanolamine(s).

La résine obtenue est neutralisée jusqu'à l'obtention d'un pH inférieur ou égal à 9, de préférence inférieur ou égal à 8,5 et avantageusement inférieur ou égal à 8 par ajout d'un acide, de préférence l'acide sulfurique ou l'acide sulfamique, afin d'arrêter les réactions de condensation du composé phénolique et de l'aldéhyde. De manière particulièrement avantageuse, le pH est supérieur ou égal à 4.

Les résines obtenues par réaction de phénol et de formaldéhyde présentent un taux de phénol libre inférieur ou égal à 2 % en poids total de liquide et un taux de formaldéhyde libre inférieur ou égal à 10 % en poids total de liquide.

La résine phénolique présente une diluabilité, mesurée à 20°C, au moins égale à 1000 %.

A la résine phénolique obtenue, on peut ajouter de l'urée en une quantité suffisante pour réagir avec l'aldéhyde libre pouvant représenter jusqu'à 50 parties en poids pour 100 parties en poids de résine et d'urée, de préférence 20 à 45 parties en poids.

L'ajout de l'urée se fait généralement par simple mélange avec la résine phénolique, de préférence à la température ambiante, notamment entre 20 et 25°C.

Selon une première variante, l'urée est ajoutée à la résine pour former un « prémélange » qui peut être conservé un certain temps avant d'être mélangé aux autres constituants pour former la composition d'encollage appliquée sur les fibres minérales. L'urée contenue dans le prémélange peut représenter la totalité de l'urée à ajouter, ou seulement une partie et le reste étant introduit lors de la fabrication de la composition d'encollage.

Selon une deuxième variante, la préparation de la composition d'encollage se fait de manière extemporanée, par simple mélange de l'urée et des autres constituants.

La composition d'encollage conforme à l'invention peut comprendre en outre les additifs ci-après dans les proportions suivantes calculées sur la base de 100 parts en poids de matières solides de résine et d'urée :
- 0 à 2 parts de silane, en particulier un aminosilane,
- 0 à 20 parts d'huile, généralement 4 à 15 parts.

Le rôle des additifs est connu et brièvement rappelé : le silane est un agent de couplage entre les fibres et la résine, et joue également le rôle d'agent anti-vieillissement ; les huiles sont des agents anti-poussières et hydrophobes.

La composition d'encollage peut encore comprendre au moins un saccharide qui a pour fonction de réduire la quantité de résine phénolique dans l'encollage afin d'en abaisser le coût. La nature du saccharide et sa teneur dans la composition d'encollage sont choisies de manière à ne pas modifier substantiellement les propriétés du liant dans le produit d'isolation final. Les saccharides d'origine naturelle, par exemple la mélasse, notamment de canne à sucre ou de betterave, sont préférés. Le saccharide peut être ajouté à la composition d'encollage dans une proportion pouvant aller jusqu'à 15 parts en poids calculée sur la base de 100 parts en poids de matières solides de résine, d'urée et de saccharide.

La composition d'encollage peut être appliquée sur des fibres minérales, notamment des fibres de verre ou de roche.

Les produits isolants acoustiques et/ou thermiques obtenus à partir de ces fibres encollées constituent aussi un objet de la présente invention. En particulier, l'application de la composition d'encollage sur des fibres fines permet d'obtenir des produits isolants présentant une conductivité thermique λ inférieure à 40 mW/(m.K).

Les exemples qui suivent permettent d'illustrer l'invention sans toutefois la limiter.

Dans les exemples, on utilise les méthodes d'analyse suivantes :
- la température de réticulation est déterminée par la méthode appelée Dynamic Mechanical Analysis (DMA) qui permet de caractériser le comportement viscoélastique d'un matériau polymérique. On procède comme suit : un échantillon de papier de verre est imprégné de la solution aqueuse à tester (30 % en poids de matières solides) puis il est fixé horizontalement entre deux mors fixes. Un élément oscillant est appliqué sur la face supérieure de l'échantillon et raccordé à un dispositif de mesure de la contrainte en fonction de la déformation appliquée qui permet de calculer le module d'élasticité E. L'échantillon est chauffé à une température variant de 30 à 250°C à la vitesse de 4°C/minute. A partir des mesures, on établit la courbe de variation du module d'élasticité E (en MPa) en fonction de la température (en °C). La température au point d'inflexion (dE/dT max) de la courbe correspond à la température de réticulation, exprimée en °C.
- le temps de pré-gélification est mesuré comme suit : on place une solution aqueuse à 30 % en poids de matières solides dans un rhéomètre en configuration plan-plan et on mesure la viscosité en oscillation sous une déformation constante (0,1 %) à 80°C (isotherme). Le temps de pré-gélification, en seconde, est le temps nécessaire pour obtenir une viscosité égale à 8 Pa.s
- la résistance en traction est mesurée selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure du bord intérieur égal à 12,5 mm. L'échantillon est disposé entre deux mandrins cylindriques d'une machine d'essais dont l'un est mobile et se déplace à vitesse constante. On mesure la force de rupture F (en N) de l'échantillon et on calcule la résistance en traction par le rapport de la force de rupture F à la masse de l'échantillon, exprimée en N/g.

### EXEMPLE 1

Composition d'encollage pour usage extemporané.

On prépare une résine phénolique par réaction de formaldéhyde et de phénol (rapport molaire formaldéhyde/phénol égal à 3,2) en présence de catalyseur (NaOH ; 6 % en poids par rapport au phénol) dans les conditions de température décrites ci-avant jusqu'à un taux de conversion du phénol supérieur à 97 %. La résine est ensuite neutralisée à pH 7,3 par de l'acide sulfamique.

On mélange 70 parts en poids de la résine phénolique et 30 parts en poids d'urée. De l'eau est ajoutée au mélange de manière à obtenir une teneur en matières solides égale à 30 %.

A partir du mélange, on réalise plusieurs compositions par ajout des composés suivants :
Composition A : 2,5 parts de sulfamate d'ammonium + 2 ,5 parts de sulfate d'ammonium
Composition B : 2,5 parts de sulfamate d'ammonium
Composition C : 2 ,5 parts de sulfate d'ammonium
Composition D : 5 parts de sulfamate d'ammonium
Composition E 5 parts de sulfate d'ammonium
Composition F : 1 part de sulfate d'ammonium + 2 parts d'une solution d'ammoniaque à 20 % en poids.

Dans le tableau 1 suivant figurent les mesures de la température de réticulation et du temps de pré-gélification des compositions précitées

**Tableau 1**

| Composition | Température de réticulation (°C) | Temps de pré-gélification (seconde) |
|---|---|---|
| A | 142 | 700 |
| B (comparatif) | 148 | 430 |
| C (comparatif) | 146 | 260 |
| D (comparatif) | 141 | 300 |
| E (comparatif) | 142 | 100 |
| F (Référence) | 154 | 1250 |

La composition A associant du sulfamate d'ammonium et du sulfate d'ammonium présente un temps de pré-gélification (700 secondes) nettement augmenté comparé à celui de la composition B (430 secondes) et de la composition C (260 secondes) alors que l'on s'attend à avoir une valeur intermédiaire entre ces deux valeurs. Ceci dénote un effet de synergie entre le sulfamate d'ammonium et le sulfate d'ammonium. Même si le temps de pré-gélification de la composition A est réduit de moitié comparé à la composition F de référence, il demeure suffisamment élevé pour être appliqué sur les fibres dans les conditions usuelles de production de prodults isolants.

La température de réticulation de la composition A est diminuée par rapport aux compositions B et C, respectivement de 6 et 4°C, et se situe au même niveau que celle des compositions D et E à taux de catalyseur équivalent. La diminution de température est importante (12°C) par rapport à la composition F de référence.

### EXEMPLE 2

Composition d'encollage utilisant un « prémélange » de résine phénolique et d'urée.

On mélange 63 parts en poids de la résine phénolique de l'exemple 1 et 37 parts en poids d'urée. De l'eau est ajoutée au mélange de manière à obtenir une teneur en matières solides égale à 30 %, puis le mélange est laissé sous agitation pendant au moins 48 heures.

A partir du mélange, on réalise plusieurs compositions par ajout des composés suivants :
Composition G : 1 part de sulfamate d'ammonium + 1 part de sulfate d'ammonium
Composition H : 2,1 parts de sulfamate d'ammonium + 2,1 parts de sulfate d'ammonium
Composition I : 2,1 parts de sulfamate d'ammonium
Composition J : 2,1 parts de sulfate d'ammonium
Composition K : 4,2 parts de sulfamate d'ammonium
Composition L : 4,2 parts de sulfate d'ammonium
Composition M: 1,1 part de sulfate d'ammonium + 0 ,5 part d'une solution d'ammoniaque à 20 % en poids

Dans le tableau 2 suivant figurent les mesures de la température de réticulation et du temps de pré-gélification des compositions précitées

**Tableau 2**

| Composition | Température de réticulation (°C) | Temps de pré-gélification (seconde) |
|---|---|---|
| G | 150 | 4400 |
| H | 145 | 4700 |
| I (comparatif) | 156 | 5000 |
| J (comparatif) | 155 | 1860 |
| K (comparatif) | 145 | 3500 |
| L (comparatif) | 144 | 1300 |
| M (référence) | 158 | 5000 |

La composition G comprenant un mélange de sulfamate d'ammonium et de sulfate d'ammonium présente une température de réticulation abaissée par rapport aux compositions I et J renfermant respectivement du sulfamate d'ammonium et de sulfate d'ammonium, à quantité totale équivalente, tout en conservant un temps de pré-gélification élevé, comparable à celui de la composition I.

L'augmentation de la quantité totale de sulfamate d'ammonium et de sulfate d'ammonium dans la composition H permet de diminuer la température de réticulation de 5°C et d'augmenter le temps de pré-gélification de 300 secondes par rapport à la composition G.

La température de réticulation de la composition H est comparable à celle des compositions K et L alors que le temps de pré-gélification est largement supérieur au temps de pré-gélification le plus élevé (composition K), ce qui démontre une synergie entre le sulfamate d'ammonium et le sulfate d'ammonium.

Les compositions G et H présentent un temps de pré-gélification comparable à la composition M de référence et une température de réticulation diminuée de 8 et 13°C, respectivement.

### EXEMPLE 3

### Fabrication d'un produit isolant à base de fibres de verre

On prépare un mélange de la résine phénolique de l'exemple 1 (63 parts en poids) et d'urée (37 parts en poids) dans les conditions de l'exemple 2, auquel on ajoute les composés suivants :
Composition N : 1,7 part de sulfamate d'ammonium + 1,7 part de sulfate d'ammonium + 0,5 part de silane (Silquest A-1100^{®} commercialisé par GE Silicones)
Composition O: 1,1 part de sulfate d'ammonium + 0,4 part d'une solution d'ammoniaque à 20 % en poids + 0,5 part de silane (Silquest A-1100^{®} commercialisé par GE Silicones).

Ces compositions d'encollage sont employées dans une ligne de fabrication de produits isolants à base de laine de verre : les compositions d'encollage sont diluées de façon à être pulvérisées séparément sur des filaments de verre formés dans un dispositif centrifuge, avant d'être collectés sur un tapis convoyeur sous la forme d'une nappe qui est acheminée dans une étuve équipée de ventilateurs pulsant de l'air à 250 ou 265°C pour assurer la réticulation de l'encollage.

A la sortie de la cheminée de l'étuve, on mesure la quantité d'ammoniac libérée lors du traitement thermique de la nappe.

Les produits obtenus présente une épaisseur de 160 mm, une densité de 19,5 kg/m³ et une perte au feu (« Loss on ignition » LOI) égale à 7%. Sur les produits, on mesure la résistance en traction et la conductivité thermique λ.

Les résultats des mesures sont rassemblés dans le tableau 3 suivant.

**Tableau 3**

| Composition | Température d'étuve (°C) | Conductivité thermique λ. mW/(m.K) | Résistance en traction (N/g) | Emissions d'ammoniac (mg/Nm³) |
|---|---|---|---|---|
| N | 265 | 33,6 | 2,50 | 33 |
| N | 250 | 33,6 | 2,89 | n. d. |
| O (référence) | 265 | 33,6 | 2,55 | 169 |

| | | | | |
|---|---|---|---|---|
| n. d. : non déterminé | | | | |

Le produit isolant obtenu à partir de la composition d'encollage N réticulée à 265°C libère une quantité d'ammoniac environ 5 fois plus faible que le produit traité avec la composition O de référence.

La réticulation de la composition d'encollage N à une température de 250°C est satisfaisante ; le produit obtenu a une résistance en traction améliorée (+17,25 %) par rapport au produit obtenu avec la composition d'encollage O de référence et aussi par rapport au produit revêtu de la même composition d'encollage traité à la température de 265°C.

### EXEMPLE 4

### Fabrication d'un produit isolant à base de fibres de verre

On prépare un mélange de la résine phénolique de l'exemple 1 (63 parts en poids) et d'urée (37 parts en poids) dans les conditions de l'exemple 2, auquel on ajoute les composés suivants :
Composition P : 2 parts de sulfamate d'ammonium + 2 parts de sulfate d'ammonium + 0,5 part de silane (Silquest A-1100^{®} commercialisé par GE Silicones)
Composition Q (référence) : 1,1 part de sulfate d'ammonium + 0,4 part d'une solution d'ammoniaque à 20 % en poids + 0,5 part de silane (Silquest A-1100^{®} commercialisé par GE Silicones).

On applique séparément chaque composition d'encollage sur des filaments de verre dans les conditions de l'exemple 3, la température dans l'étuve étant égale à 265°C.

Les produits obtenus ont une épaisseur de 180 mm, une densité égale à 13,4 kg/m³, une perte au feu (« Loss on ignition » LOI) égale à 7 % et une conductivité thermique λ égale à 37,0 mW/(m.K).

Les produits isolants obtenus à partir des compositions d'encollage P et Q présentent une résistance en traction égale à 3,8 et 3,1 N/g, respectivement.

L'amélioration de la résistance en traction du produit traité avec la composition d'encollage P (+ 22,6 %) dénote une meilleure aptitude à la réticulation de l'encollage lors du traitement thermique.

### EXEMPLE 5

Fabrication d'un produit isolant à base de fibres de verre de densité élevée.

On prépare un mélange comprenant la résine phénolique de l'exemple 1 (59,5 parts en poids) et de l'urée (25,5 parts en poids). De l'eau est ajoutée au mélange de manière à obtenir une teneur en matières solides comprise entre 30 et 60 %, puis le mélange est laissé sous agitation pendant au moins 8 heures. On ajoute ensuite de la mélasse (15 parts en poids ; commercialisée par AGROKOMMERZ).

Au mélange précité, on ajoute les composés suivants :
Composition P : 1,3 part de sulfamate d'ammonium + 1,3 part de sulfate d'ammonium
Composition Q : 1 part de sulfate d'ammonium + 3 parts d'une solution d'ammoniaque à 20 % en poids.

Les compositions d'encollage sont utilisées dans une ligne de fabrication industrielle de produits isolants à base de laine de verre dans les conditions de l'exemple 3 (température de l'air dans l'étuve : 250°C).

Les produits obtenus présentent une densité égale à 75,6 kg/m³ et une perte au feu (« loss on ignition » LOI) égale à 7,7 %.

A la sortie de la cheminée de l'étuve, on mesure la quantité d'ammoniac libérée lors du traitement thermique de la laine de verre.

| Composition | ammoniac (mg/Nm³) |
|---|---|
| P | 45 |
| Q (Référence) | 90 |

L'ajout du mélange de sulfamate d'ammonium et de sulfate d'ammonium dans la composition P permet de réduire les émissions d'ammoniac de 50 %.

### EXEMPLE 6

Composition d'encollage utilisant un « prémélange » de résine phénolique et d'urée.

On prépare une résine phénolique par réaction de formaldéhyde et de phénol (rapport molaire formaldéhyde/phénol égal à 4) en présence de catalyseur (NaOH : 5 % en poids par rapport au phénol), la deuxième phase mentionnée dans la description étant effectuée à 70°C pendant 60 minutes. La résine est ensuite neutralisée à pH 7,4 par de l'acide sulfurique.

On mélange 67 parts en poids de la résine phénolique et 33 parts en poids d'urée. De l'eau est ajoutée au mélange de manière à obtenir une teneur en matières solides comprise entre 30 et 60 %, puis le mélange est laissé sous agitation pendant au moins 8 heures.

A partir du mélange, on réalise les compositions ci-après par ajout des composés suivants :
Composition R: 1,3 part de sulfamate d'ammonium + 1,3 part de sulfate d'ammonium
Composition S: 1,8 part de sulfate d'ammonium + 2,5 parts d'une solution d'ammoniaque à 20 % en poids.

Les compositions R et S (Référence) présentent un temps de pré-gélification égal à 2035 secondes et 2090 secondes, respectivement. On considère que ces temps de pré-gélification sont similaires.

On réticule les compositions R et S à 180°C et on mesure la quantité d'ammoniac émis lors de la réticulation :

| Composition | ammoniac (g/kg d'encollage réticulé) |
|---|---|
| R | 0,86 |
| S (Référence) | 2,09 |

L'ajout du mélange de sulfamate d'ammonium et de sulfate d'ammonium dans la composition R permet de réduire les émissions d'ammoniac de 58,85 %.

## Revendications

1. Composition d'encollage pour fibres minérales comprenant une résine phénolique, de l'urée, un catalyseur de réticulation de la résine, et éventuellement des additifs, **caractérisée en ce que** le catalyseur est un mélange de sulfamate d'ammonium et de sulfate d'ammonium et **en ce que** le rapport molaire du sulfamate d'ammonium au sulfate d'ammonium varie de 0,40:0,60 à 0,60 :0,40.

2. Composition selon la revendication 1, **caractérisée en ce que** le taux de sulfamate d'ammonium et de sulfate d'ammonium varie de 2 à 8 % en poids des matières solides de la résine et de l'urée.

3. Composition selon la revendication 2, **caractérisée en ce que** le taux varie de 2,5 à 6 % et avantageusement de 2,6 à 4,2 %.

4. Composition selon l'une des revendications 1 à 3, **caractérisée en ce que** la résine thermodurcissable est choisie parmi les résines phénoliques obtenues par réaction d'un composé phénolique et d'un aldéhyde en présence d'un catalyseur basique, dans un rapport molaire aldéhyde/composé phénolique supérieur à 1.

5. Composition selon la revendication 4, **caractérisée en ce que** le rapport molaire aldéhyde/composé phénolique varie de 2 à 5.

6. Composition selon la revendication 4 ou 5, **caractérisée en ce que** le composé phénolique est le phénol et le l'aldéhyde est le formaldéhyde.

7. Composition selon la revendication 6, **caractérisée en ce que** la résine présente une taux de phénol libre inférieur ou égal à 2 % en poids total de liquide et un taux de formaldéhyde libre inférieur ou égal à 10 % en poids total de liquide.

8. Composition selon l'une des revendications 1 à 7, **caractérisée en ce que** l'urée représente jusqu'à 50 parties en poids pour 100 parties en poids de résine et d'urée.

9. Composition selon l'une des revendications 1 à 8, **caractérisé en ce qu'**elle comprend en outre les additifs ci-après dans les proportions suivantes calculées sur la base de 100 parts en poids de matières solides de résine et d'urée :
- 0 à 2 parts de silane, en particulier un aminosilane,
- 0 à 20 parts d'huile, généralement 4 à 15 parts.

10. Utilisation de la composition d'encollage selon l'une des revendications 1 à 9 pour la réalisation de produits d'isolation thermique et/ou acoustiques présentant une conductivité thermique λ inférieure à 40 mW/(m.K).

11. Composition selon la revendication 1, **caractérisée en ce que** les fibres minérales sont des fibres de roche ou de verre.

12. Composition selon la revendication 5, **caractérisée en ce que** le rapport molaire aldéhyde/composé phénolique varie de 2,3 à 4,2.

13. Composition la revendication 8, **caractérisée en ce que** l'urée représente 20 à 45 parties en poids pour 100 parties en poids de résine et d'urée.

## Patentansprüche

1. Bindemittelzusammensetzung für Mineralfasern enthaltend eine Phenolharz, Harnstoff, einen Katalysator für die Harzvernetzung, und ggf. Additive, **dadurch gekennzeichnet, dass** der Katalysator eine Mischung aus Ammoniumsulfamat und Ammoniumsulfat ist und dass das Molverhältnis von Ammoniumsulfamat zu Ammoniumsulfat zwischen 0,40:0,60 und 0,60:0,40 variiert.

2. Zusammensetzung nach Anspruch 1, **dadurch gekennzeichnet, dass** der Anteil an Ammoniumsulfamat und Ammoniumsulfat zwischen 2 und 8 Gew.-% bezogen auf den Feststoffgehalt von Harz und Harnstoff beträgt.

3. Zusammensetzung nach Anspruch 2, **dadurch gekennzeichnet, dass** der Gehalt zwischen 2,5 und 6 %, vorzugsweise zwischen 2,6 und 4,2 % beträgt.

4. Zusammensetzung nach einem der Ansprüche 1 bis 3, **dadurch gekennzeichnet, dass** das wärmehärtbare Harz ausgewählt ist aus Phenolharzen, die erhalten sind durch die Reaktion einer phenolischen Verbindung und eines Aldehyds in Anwesenheit eines basischen Katalysators in einem Molverhältnis von Aldehyd zu phenolischer Verbindung größer 1.

5. Zusammensetzung nach Anspruch 4, **dadurch gekennzeichnet, dass** das Molverhältnis von Aldehyd zu phenolischer Verbindung zwischen 2 und 5 beträgt.

6. Zusammensetzung nach Anspruch 4 oder 5, **dadurch gekennzeichnet, dass** die phenolische Verbindung Phenol und das Aldehyd Formaldehyd ist.

7. Zusammensetzung nach Anspruch 6, **dadurch gekennzeichnet, dass** das Harz einen Gehalt an freiem Phenol kleiner oder gleich 2 % bezogen auf das Gesamtgewicht der Flüssigkeit und einen Gehalt an freiem Formaldehyd kleiner oder gleich 10 % bezogen auf das Gesamtgewicht der Flüssigkeit aufweist.

8. Zusammensetzung nach einem der Ansprüche 1 bis 7, **dadurch gekennzeichnet, dass** der Harnstoff bis zu 50 Gew.-Teile bezogen auf 100 Gew.-Teile Harz und Harnstoff beträgt.

9. Zusammensetzung nach einem der Ansprüche 1 bis 8, **dadurch gekennzeichnet, dass** sie außerdem die nachfolgenden Additive in den angegebenen Teilen bezogen auf 100 Gew.-Teile Feststoff von Harz und Harnstoff aufweist:
- 0 bis 2 Teile eines Silans, insbesondere ein Aminosilan,
- 0 bis 20 Teile eines Öls, üblicherweise 4 bis 15 Teile.

10. Verwendung der Bindemittelzusammensetzung nach einem der Ansprüche 1 bis 9 zur Herstellung von thermischen und/oder akustischen Dämmstoffen, die eine Wärmeleitfähigkeit λ kleiner 40 mW/(m·K) aufweisen.

11. Zusammensetzung nach Anspruch 1, **dadurch gekennzeichnet, dass** die Mineralfasern Gesteinsfasern oder Glasfasern sind.

12. Zusammensetzung nach Anspruch 5, **dadurch gekennzeichnet, dass** das Molverhältnis von Aldehyd zu phenolischer Verbindung zwischen 2,3 und 4,2 beträgt.

13. Zusammensetzung nach Anspruch 8, **dadurch gekennzeichnet, dass** der Harnstoff 20 bis 45 Gew.-Teile bezogen auf 100 Gew.-Teile Harz und Harnstoff ausmacht.

## Claims

1. A sizing composition for mineral fibers comprising a phenolic resin, urea, a resin crosslinking catalyst, and optionally additives, **characterized in that** the catalyst is a mixture of ammonium sulfamate and ammonium sulfate, and **in that** the molar ratio of ammonium sulfamate to ammonium sulfate varies from 0.40:0.60 to 0.60:0.40.

2. The composition as claimed in claim 1, **characterized in that** the content of ammonium sulfamate and ammonium sulfate varies from 2 to 8% by weight of the resin and urea solids.

3. The composition as claimed in claim 2, **characterized in that** the content varies from 2.5 to 6% and advantageously from 2.6 to 4.2%.

4. The composition as claimed in one of claims 1 to 3, **characterized in that** the thermosetting resin is chosen from phenolic resins obtained by reaction of a phenolic compound and an aldehyde in the presence of a basic catalyst, in an aldehyde/phenolic compound molar ratio greater than 1.

5. The composition as claimed in claim 4, **characterized in that** the aldehyde/phenolic compound molar ratio varies from 2 to 5.

6. The composition as claimed in claim 4 or 5, **characterized in that** the phenolic compound is phenol and the aldehyde is formaldehyde.

7. The composition as claimed in claim 6, **characterized in that** the resin has a free phenol content less than or equal to 2% of the total weight of liquid and a free formaldehyde content less than or equal to 10% of the total weight of liquid.

8. The composition as claimed in one of claims 1 to 7, **characterized in that** the urea represents up to 50 parts by weight per 100 parts by weight of resin and urea.

9. The composition as claimed in one of claims 1 to 8, **characterized in that** it moreover comprises the additives below in the following proportions calculated on the basis of 100 parts by weight of resin and urea solids:
- 0 to 2 parts of silane, in particular an aminosilane; and
- 0 to 20 parts of oil, generally 4 to 15 parts.

10. The use of the sizing composition as claimed in one of claims 1 to 9, for producing thermal and/or acoustic insulation products having a thermal conductivity λ of less than 40 mW/(m.K).

11. The composition as claimed in claim 1, **characterized in that** the mineral fibers are rock or glass fibers.

12. The composition as claimed in claim 5, **characterized in that** the aldehyde/phenolic compound molar ratio varies from 2.3 to 4.2.

13. The composition as claimed in claim 8, **characterized in that** urea represents from 20 to 45 parts by weight per 100 parts by weight of resin and urea.
